(19) Europäisches Patentamt / European Patent Office / Office européen des brevets

(11) **EP 4 332 786 A1**

(12) **EUROPEAN PATENT APPLICATION**
published in accordance with Art. 153(4) EPC

(43) Date of publication:
**06.03.2024 Bulletin 2024/10**

(21) Application number: **22832027.1**

(22) Date of filing: **28.06.2022**

(51) International Patent Classification (IPC):
**G06F 16/23** $^{(2019.01)}$

(52) Cooperative Patent Classification (CPC):
**G06F 16/23; G06F 16/242; G06F 16/2453; G06N 3/04**

(86) International application number:
**PCT/CN2022/101826**

(87) International publication number:
**WO 2023/274213 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2021 CN 202110729805**

(71) Applicant: **Huawei Technologies Co., Ltd.
Longgang
Shenzhen, Guangdong 518129 (CN)**

(72) Inventors:
• **LI, Shifu
  Shenzhen, Guangdong 518129 (CN)**
• **WANG, Tianqing
  Shenzhen, Guangdong 518129 (CN)**
• **NIE, Wen
  Shenzhen, Guangdong 518129 (CN)**

(74) Representative: **MERH-IP Matias Erny Reichl Hoffmann
Patentanwälte PartG mbB
Paul-Heyse-Strasse 29
80336 München (DE)**

(54) **DATA PROCESSING METHOD AND RELATED APPARATUS**

(57) A data processing method applied to a database system is provided. The method includes: obtaining a model training request, where the model training request includes a plurality of training samples and a model training policy, and the plurality of training samples are grouped into N training sample groups (201); generating an execution plan of the model training policy and an estimation execution cost of the execution plan executed by the database system (202); obtaining, based on the estimation execution cost, M training sample groups in the N training sample groups (204); training a to-be-trained model in parallel by using the M training sample groups, to obtain M pieces of parameter update data; and updating the to-be-trained model based on the M pieces of parameter update data, to obtain a trained model (205). When model training is performed in the database system, a plurality of training sample groups are input in parallel to the to-be-trained model at a same moment. This reduces time overheads of the model training.

Obtain a model training request, where the model training request includes a plurality of training samples and a model training policy, and the plurality of training samples are grouped into N training sample groups — 201

Generate an execution plan of the model training policy and a prediction execution cost of the execution plan executed by a database system — 202

Obtain, based on the prediction execution cost, M training sample groups in the N training sample groups — 203

Train a to-be-trained model in parallel by using the M training sample groups, to obtain M pieces of parameter update data — 204

Update the to-be-trained model based on the M pieces of parameter update data, to obtain a trained model — 205

FIG. 2

EP 4 332 786 A1

**Description**

This application claims priority to Chinese Patent Application No. 202110729805.X, filed with the China National Intellectual Property Administration on June 29, 2021 and entitled "DATA PROCESSING METHOD AND RELATED APPARATUS", which is incorporated herein by reference in its entirety.

**TECHNICAL FIELD**

This application relates to the computer field, and in particular, to a data processing method and a related apparatus.

**BACKGROUND**

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and is intended to understand essence of intelligence and produce a new intelligent machine that can react in a manner similar to human intelligence. Artificial intelligence is to study design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

When AI-related applications (for example, model training and model inference) are embedded into a database system, in a conventional implementation, the database system provides only an SQL engine interface, and cannot perform finer-grained control on a model training process based on a capability of a database, thereby losing a computing advantage of the database system. Consequently, training efficiency during model training in the database system is low, and time overheads are high.

**SUMMARY**

According to a first aspect, an embodiment of this application provides a data processing method, applied to a database system. The method includes:
obtaining a model training request, where the model training request includes a plurality of training samples and a model training policy, and the plurality of training samples are grouped into N training sample groups.

A model inference request may be a structured query language (structured query language, SQL) statement, the database system may include an SQL parser, the SQL parser may perform syntax parsing on an SQL, and after the syntax parsing succeeds, the SQL entered by a user may be transformed into a structured abstract syntax tree (abstract syntax tree, AST). A leaf node of the AST represents data provided by a data source, and a non-leaf node represents an SQL calculation operation. The data provided by the data source may be a plurality of training samples, and the SQL calculation operation may be the model training policy.

The plurality of training samples may be divided into N training sample groups, and each training sample group may include a plurality of training samples. In an implementation, quantities of training samples included in different training sample groups may be the same or basically equal, and a quantity of training samples included in each training sample group may be determined based on a quantity of samples input each time a to-be-trained model is trained, for example, the quantity of training samples included in each training sample group may be equal to or basically equal to the quantity of samples input each time the to-be-trained model is trained.

An execution plan of the model training policy and an estimation execution cost of the execution plan executed by the database system are generated. The estimation execution cost of the execution plan may be a computing resource required for subsequently training, based on the execution plan, the to-be-trained model, and an execution cost may also be referred to as an execution overhead corresponding to the execution plan.

In a possible implementation, the execution plan includes a plurality of AI operators, and the estimation execution cost of the execution plan is obtained based on estimation execution costs of the plurality of AI operators, for example, the estimation execution cost of the execution plan may be determined by integrating the estimation execution costs of the plurality of AI operators.

M training sample groups in the N training sample groups are obtained based on the estimation execution cost. A to-be-trained model is trained in parallel by using the M training sample groups, to obtain M pieces of parameter update data. The M training sample groups are in a one-to-one correspondence with the M pieces of parameter update data. When the to-be-trained model is trained, one piece of parameter update data may be obtained based on each training sample group. Specifically, the to-be-trained model may perform feedforward processing on each training sample group to obtain a processing result, and a loss may be obtained based on the processing result and a label of the training sample, so that the parameter update data may be obtained through calculation based on the loss. The parameter update data may be an update gradient, the update gradient is used when gradient descent update of the model is performed, and the update gradient may be understood as a derivative vector of a parameter in a loss function.

After the estimation execution cost is obtained, because the estimation execution cost may indicate the computing resource required for executing the execution plan, and available computing resources in the database are limited, a training rule may be determined based on the estimation execution cost, so that a training process of the to-be-trained model is performed more quickly with the limited available resources.

Specifically, for one to-be-trained model, the quantity of training samples that are input each time during training is limited, so that a large quantity of training samples need to be input for a plurality of times to complete the training process, and the time overheads is high. In an embodiment of this application, when there are sufficient computing resources, a plurality of training sample groups are input in parallel to the to-be-trained model at a same moment, and therefore, the time overheads of the model training is reduced.

In a possible implementation, a quantity of training samples used in parallel each time may be M. M copies of the to-be-trained model may be obtained, and each training sample group is input into one to-be-trained model. Alternatively, the to-be-trained model is split to obtain M small models, and each training sample group is input into one small model. Alternatively, M1 copies of the to-be-trained model may be obtained, and the to-be-trained model is split to obtain M2 small models, where a sum of M1 and M2 is M, each training sample group is input into one small model or one to-be-trained model, and the feedforward processing of the model is performed to obtain the M pieces of parameter update data (one piece of parameter update data may be obtained by using each to-be-trained model or small model, and the parameter update data may be the update gradient, a variation of a model parameter, or the like), so that the to-be-trained model may be updated based on the M pieces of parameter update data.

The to-be-trained model is updated based on the M pieces of parameter update data, to obtain a trained model.

It should be understood that iterations may also be performed, based on the training sample, on the trained model for several times, and a complete model is finally obtained by fine tuning a parameter. For a generated model, detailed information and training information of the model may be stored.

An embodiment of this application provides the data processing method, applied to the database system. The method includes: obtaining the model training request, where the model training request includes the plurality of training samples and the model training policy, and the plurality of training samples are grouped into the N training sample groups; generating the execution plan of the model training policy and the estimation execution cost of the execution plan executed by the database system; obtaining, based on the estimation execution cost, the M training sample groups in the N training sample groups; training the to-be-trained model in parallel by using the M training sample groups, to obtain the M pieces of parameter update data; and updating the to-be-trained model based on the M pieces of parameter update data, to obtain the trained model. In the foregoing manner, the plurality of training sample groups are input in parallel to the to-be-trained model at a same moment. This reduces the time overheads of the model training.

In a possible implementation, the execution plan includes a plurality of AI operators, and an operator type of the AI operator is preconfigured on the database system. The AI operator may be an algorithm used when an AI-related operation is performed. For example, the AI operator may include but is not limited to a gradient descent operator gradient descent, a K-means operator, an Xgboost operator, a Bayes operator Bayes, a decision tree operator decision tree, a shuffle operator shuffle, an iteration operator iteration, and the like.

In a possible implementation, the estimation execution cost of the execution plan is obtained based on estimation execution costs of the plurality of AI operators. An estimation execution cost of each AI operator may be related to at least one piece of the following information: an amount of scanned data, an iteration round iteration, an iteration batch size (batch size), or a classification category quantity categorize. A specific model may further involve an ensemble algorithm, a quantity of base learners, a tree algorithm, a maximum tree depth, a quantity of leaf nodes, or the like.

In a possible implementation, the method further includes: obtaining, based on the plurality of AI operators, the estimation execution costs of the plurality of AI operators by using an execution plan query statement. Specifically, after the estimation execution costs are obtained, the estimation execution cost may be written into the execution plan (for example, an estimation execution plan of each AI operator may be written into the execution plan). The user may obtain this part of information by querying an SQL execution plan query statement. For example, in an openGauss database, an explain command may be used to query and execute an SQL estimation execution plan.

In this embodiment of this application, an estimated estimation execution cost is added to the execution plan for convenient query and optimization by the user.

A quantity M of training sample groups during parallel feedforward may be determined based on the estimation execution cost of the execution plan that is obtained through calculation.

In a possible implementation, a value of M is negatively correlated with the estimation execution cost. A higher estimation execution cost may indicate more computing resources required for executing the execution plan, so that a quantity of training sample groups during the parallel feedforward cannot be excessively high. Otherwise, currently available computing resources are insufficient. In addition, the value of M may also be related to the currently available computing resource in the database system. Specifically, the value of M is positively correlated with the currently available computing resource. More currently available computing resources indicate a larger value of M, in other words, more available computing resources indicate a larger allowed quantity of training sample groups during the parallel feedforward.

In this embodiment of this application, the value of M may be determined by integrating the estimation execution cost and the currently available computing resource, so that without exceeding the available computing resource, an amount of parallel model training is maximized, and usage of the computing resource is maximized.

In a possible implementation, the method further includes: performing a shuffle operation on the plurality of training samples, to obtain a plurality of shuffled training samples; and grouping the plurality of shuffled training samples, to obtain the N training sample groups.

The AI operator may be scanned in parallel, data may be loaded to a memory, and the shuffle operation is performed on the plurality of training samples indicated in the model training request, to obtain the plurality of shuffled training samples. The shuffle operation is used to shuffle the training samples, so that distribution of the training samples is as much as close to real distribution. This facilitates fitting of a machine learning algorithm, enhances a generalization capability, and reduces subsequent iteration rounds. For example, the shuffle operation may be implemented by using the shuffle operator (or the shuffle operator). In this way, the plurality of shuffled training samples are grouped, to obtain the N training sample groups.

In a possible implementation, the user may indicate, in the model training request, to train X to-be-trained models for implementing a same task, so that the X to-be-trained models need to be trained to obtain X trained models. Each to-be-trained model corresponds to one trained model (for a training manner of each of the X to-be-trained models, refer to the description in the foregoing embodiment). It should be understood that the X trained models may be different models (for example, having different model structures and different algorithms), and the X trained models are used to implement a target task, for example, an image classification task, an image segmentation task, or an image recognition task.

When model inference is performed, the model inference request entered by the user may be received. The model training request may be an SQL statement, and the model inference request indicates the target task.

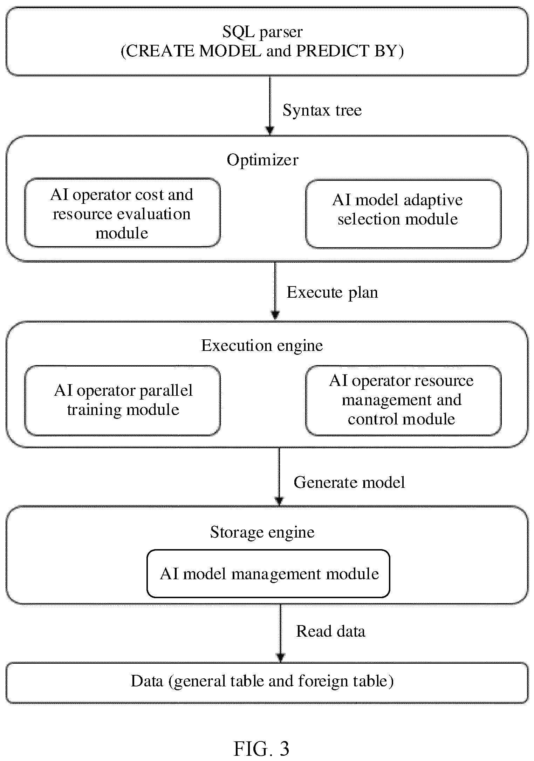

In a possible implementation, the SQL parser may include a processing model (for example, PREDICT BY shown in FIG. 3) that is used to process the model inference request related to inference. The SQL parser may use the processing model that is used to process the model inference request related to inference to perform the syntax parsing on an SQL, to obtain an indication of the user for the target task.

In response to the model inference request of the user, the models (the X trained models) used to implement the target task may be obtained from the memory, and a model (namely, a target model) used to perform the model inference is selected from the X trained models.

In this embodiment of this application, the method further includes: obtaining a currently available computing resource and an execution cost of each of the X trained models, and determining a target model from the X trained models. The target model is used to perform the model inference.

Specifically, to select, from the X trained models, a model with the best performance in a current case for inference, the target model may be determined with reference to model performance of the model and the available computing resource of the current database. The model performance of the model may include information such as accuracy (Accuracy), precision (Precision), an F1 score, and a recall (Recall). The model performance may further include the estimation execution cost of the model. Available computing resources may indicate a current load status, and may include, for example, at least one of an input/output I/O resource, a central processing unit CPU resource, a graphics processing unit GPU resource, and a memory resource.

In a possible implementation, the target model may be determined from the X trained models based on the model performance of the model and the available computing resource of the current database. A determined rule may be: When the currently available computing resource can meet a requirement of the estimation execution cost (that is, overload is avoided), the model with optimal model performance is selected as the target model for inference. This greatly improves the performance during inference. For example, an evaluation score of each trained model may be obtained based on the model performance of the model and the available computing resource of the current database. The evaluation score may indicate a priority of selecting the model for inference.

In this embodiment of this application, an existing resource and the execution cost in the database are introduced as evaluation criteria for evaluating the model, and a dimension for evaluating the model is added in an actual operating scenario. Therefore, availability of the model can be verified more comprehensively, and an optimal model is selected for inference.

In a possible implementation, the computing resource includes at least one of the following: an input/output I/O resource, a central processing unit CPU resource, a graphics processing unit GPU resource, and a memory resource.

According to a second aspect, this application provides a data processing apparatus, used in a database system. The apparatus includes:

an obtaining module, configured to obtain a model training request, where the model training request includes a plurality of training samples and a model training policy, and the plurality of training samples are grouped into N training sample groups;

an execution plan generation module, configured to generate an execution plan of the model training policy and an estimation execution cost of the execution plan executed by the database system;

the obtaining module is further configured to obtain, based on the estimation execution cost, M training sample groups in the N training sample groups; and

a model training module, configured to: perform feedforward processing in parallel on each of the M training sample groups by using a to-be-trained model, to obtain M pieces of parameter update data; and update the to-be-trained model based on the M pieces of parameter update data, to obtain a trained model.

In a possible implementation, the parameter update data is an update gradient of the model.

In a possible implementation, the execution plan includes a plurality of AI operators, and an operator type of the AI operator is preconfigured on the database system.

In a possible implementation, the estimation execution cost of the execution plan is obtained based on estimation execution costs of the plurality of AI operators.

In a possible implementation, the obtaining module is further configured to:

obtain, based on the plurality of AI operators, the estimation execution costs of the plurality of AI operators by using an execution plan query statement.

In a possible implementation, a value of M is negatively correlated with the estimation execution cost.

In a possible implementation, the obtaining module is further configured to:

obtain a currently available computing resource of the database system; and

the obtaining module is further configured to:

obtain, based on the estimation execution cost and the currently available computing resource, the M training sample groups in the N training sample groups. The value of M is positively correlated with the currently available computing resource.

In a possible implementation, the apparatus further includes a sample grouping module, configured to: perform a shuffle operation on the plurality of training samples, to obtain a plurality of shuffled training samples; and group the plurality of shuffled training samples, to obtain the N training sample groups.

In a possible implementation, there are X to-be-trained models, there are X trained models, each to-be-trained model corresponds to one trained model, the X trained models are different models, and the X trained models are used to implement a target task.

The obtaining module is further configured to:

after that the to-be-trained model is updated based on the M pieces of parameter update data, to obtain a trained model, obtain a model inference request, where the model inference request indicates N trained models; and

obtain a currently available computing resource and an execution cost of each of the N trained models, and determine a target model from the N trained models.

The apparatus further includes:

a model inference module, configured to perform model inference by using the target model.

In a possible implementation, the computing resource includes at least one of the following:

an input/output I/O resource, a central processing unit CPU resource, a graphics processing unit GPU resource, and a memory resource.

According to a third aspect, this application provides a data processing apparatus. The apparatus may include a processor, the processor is coupled to a memory, the memory stores program instructions, and when the program instructions stored in the memory are executed by the processor, the method in any one of the first aspect or the implementations of the first aspect is implemented. For details about steps performed by the processor in possible implementations of the first aspect, refer to the first aspect. Details are not described herein again.

According to a fourth aspect, this application provides a computer-readable storage medium. The computer-readable storage medium stores a computer program, and when the computer program is run on a computer, the computer is enabled to perform the method in the implementations of the first aspect.

According to a fifth aspect, this application provides a circuit system. The circuit system includes a processing circuit, and the processing circuit is configured to perform the method in any one of the first aspect or the implementations of the first aspect.

According to a sixth aspect, this application provides a computer program. When the computer program is run on a computer, the computer is enabled to perform the method in the implementations of the first aspect.

According to a seventh aspect, this application provides a chip system. The chip system includes a processor, configured to implement functions in the foregoing aspects, for example, sending or processing data and/or information in the foregoing methods. In a possible design, the chip system further includes a memory. The memory is configured to store program instructions and data that are necessary for a server or a communication device. The chip system may include a chip, or may include a chip and another discrete device.

An embodiment of this application provides the data processing method, applied to the database system. The method includes: obtaining the model training request, where the model training request includes the plurality of training samples and the model training policy, and the plurality of training samples are grouped into the N training sample groups; generating the execution plan of the model training policy and the estimation execution cost of the execution plan executed by the database system; obtaining, based on the estimation execution cost, the M training sample groups in the N training sample groups; training the to-be-trained model in parallel by using the M training sample groups, to obtain the M pieces of parameter update data; and updating the to-be-trained model based on the M pieces of parameter update data, to obtain the trained model. In the foregoing manner, when model training is performed in the database system, a plurality of training sample groups are input in parallel to the to-be-trained model at a same moment. This reduces time overheads of the model training.

## BRIEF DESCRIPTION OF DRAWINGS

FIG. 1A is a schematic diagram of an architecture of a database system;
FIG. 1B is a schematic diagram of an architecture of a distributed database system according to an embodiment of this application;
FIG. 1C is a schematic diagram of another architecture of a distributed database system according to an embodiment of this application;
FIG. 1D is a schematic diagram of an application architecture according to an embodiment of this application;
FIG. 1E is a schematic diagram of a system according to an embodiment of this application;
FIG. 2 is a schematic flowchart of a data processing method according to an embodiment of this application;
FIG. 3 is a schematic flowchart of a data processing method according to an embodiment of this application;
FIG. 4 is a schematic flowchart of a data processing method according to an embodiment of this application;
FIG. 5 is a schematic diagram of effect according to an embodiment of this application;
FIG. 6 is a schematic flowchart of a data processing method according to an embodiment of this application;
FIG. 7 is a schematic diagram of a structure of a data processing apparatus according to this application;
FIG. 8 is a schematic diagram of a computer-readable storage medium according to this application; and
FIG. 9 is a schematic diagram of a computer device according to this application.

## DESCRIPTION OF EMBODIMENTS

The following describes embodiments of this application with reference to the accompanying drawings. It is clear that the described embodiments are merely some but not all of embodiments of this application. Persons of ordinary skill in the art may learn that the technical solutions provided in embodiments of this application are also applicable to a similar technical problem as a technology develops and a new scenario emerges.

In the specification, claims, and accompanying drawings of this application, the terms such as "first" and "second" are intended to distinguish between similar objects but do not necessarily indicate a specific order or sequence. It should be understood that the data termed in such a way are interchangeable in proper circumstances so that embodiments described herein can be implemented in orders other than the order illustrated or described herein. Moreover, the terms "include", "contain" and any other variants mean to cover the non-exclusive inclusion. For example, a process, method, system, product, or device that includes a list of steps or modules is not necessarily limited to those expressly listed steps or modules, but may include other steps or modules not expressly listed or inherent to such a process, method, product, or device. Naming or numbering of steps in this application does not mean that steps in a method procedure need to be performed according to a time/logical sequence indicated by the naming or the numbering. An execution sequence of steps in a procedure that have been named or numbered may be changed based on a technical objective to be implemented, provided that same or similar technical effect can be achieved.

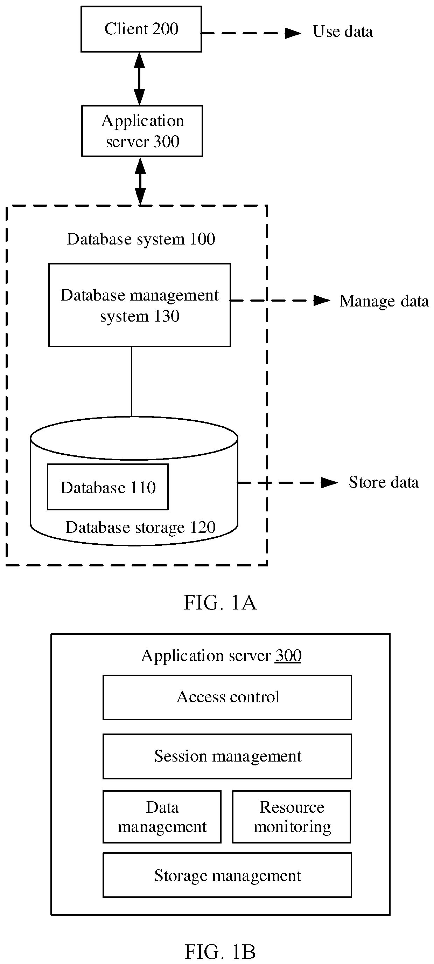

A method provided in embodiments of this application may be applied to a database system (database system) 100 shown in FIG. 1A. The database system 100 is communicatively connected to an application server 300, to provide a database service for the application server 300. The application server 300 is communicatively connected to a client 200. The client 200 is usually an application deployed on user equipment. The client 200 initiates a service request to the application server 300 to implement a specific function, for example, downloading or uploading data. Data related to the client 200 is stored in the database system 100. How the application server 300 needs to operate the data related to the client 200 in a process of responding to a service request of the client 200 (for example, querying data, adding data, updating data, and deleting data), may be implemented by sending an operation request to the database system 100.

FIG. 1A shows a typical logical architecture of the database system 100. According to FIG. 1A, the database system 100 includes a database 110 and a database management system (database management system, DBMS) 130.

The database 110 is an organized data set stored in a data storage (data storage) 120, namely, an associated data set organized, stored, and used based on a particular data model. Based on different data models used for organizing data, the data may be divided into a plurality of types, for example, relational data (relational data), graph (graph) data, and time series (time series) data. The relational data is data modeled by using a relational model, and is usually represented as a table, where a row in the table represents a set of associated values of an object or entity. The graph data, "graph" for short, is used to represent a relationship, for example, a social relationship, between objects or entities. The time series data, time series data for short, is a data column recorded and indexed in a time sequence, and is used to describe status change information of an object in a time dimension.

The database management system 130 is a core of a database system, and is system software used to organize, store, and maintain data. The client 200 can access the database 110 by using the database management system 130. A database administrator can also maintain a database by using the database management system. The database management system 130 provides various functions for the client 200 to establish, modify, and query the database. The client 200 may be an application or user equipment running an application. The functions provided by the database management system 130 may include but are not limited to the following items: (1) Data definition function: The database management system 130 provides a data definition language (data definition language, DDL) to define a structure of the database 110, where the DDL is used to depict a database framework, and may be stored in a data dictionary. (2) Data access function: The database management system 130 provides a data manipulation language (data manipulation language, DML) to implement basic access operations on the database 110, for example, retrieval, insertion, modification, and deletion. (3) Database operation management function: The database management system 130 provides a data control function to effectively control and manage operation of the database 110, to ensure correct and effective data. (4) Database establishment and maintenance functions: include functions such as loading of initial data of the database, dump, restoration, and reorganization of the database, and monitoring and analysis of system performance. (5) Transmission of the database: The database management system provides transmission of processed data, to implement communication between the client and the database management system, and the database management system usually coordinates with an operating system to complete the transmission of the processed data.

The database storage 120 may include but is not limited to a solid-state drive (solid-state drive, SSD), a disk array, a cloud storage, or non-transitory computer-readable storage medium of another type.

In this embodiment of this application, the client 200 may initiate a service request to the application server 300. A data service is deployed in the application server 300, and is used to respond to the service request initiated by the client 200. In an embodiment, the data service deployed in the application server 300 may verify validity of access of the client 200, record a session after verification succeeds, and convert the service request initiated by the client 200 into a data operation request for the database 110, for example, a query statement. Further, the data service may perform real-time statistics collection and control on system resources occupied by different clients 200.

It should be understood that persons skilled in the art may understand that one database system may include components more or less than those shown in FIG. 1A, or include components different from those shown in FIG. 1A. FIG. 1A merely shows components more related to implementations disclosed in embodiments of the present invention.

The following describes an embodiment of the application server 300 provided in this application with reference to FIG. 1B.

Functions implemented by the application server 300 may include but are not limited to access control, session management, data management, resource monitoring, storage management, and the like. The access control may control validity of access of a client and control a bandwidth. The session management may be performed to manage a session of a client that successfully accesses the application server 300. The data management may convert a service request from a client into an operation request for a database. The resource monitoring may perform real-time statistics collection and control on system resources occupied by different clients. The storage management may convert an operation request for the database into an operation request supported by or executable in a database system, for example, a database query statement ("query" for short), and the query may be a structured query language (structured query language, SQL) query. It should be noted that the application server 300 may convert the service request into a query supported by or executable in the database system at one time or several times. A specific conversion process belongs to the conventional technology in the art.

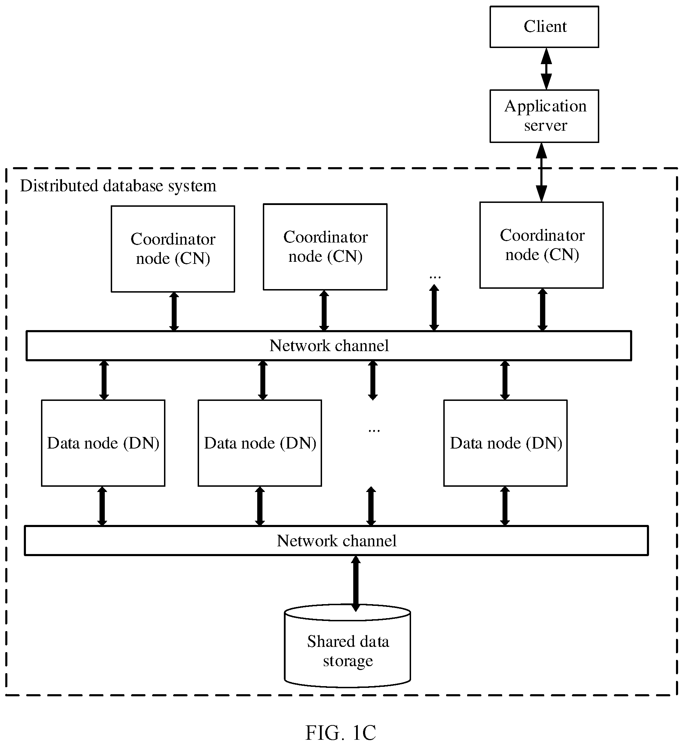

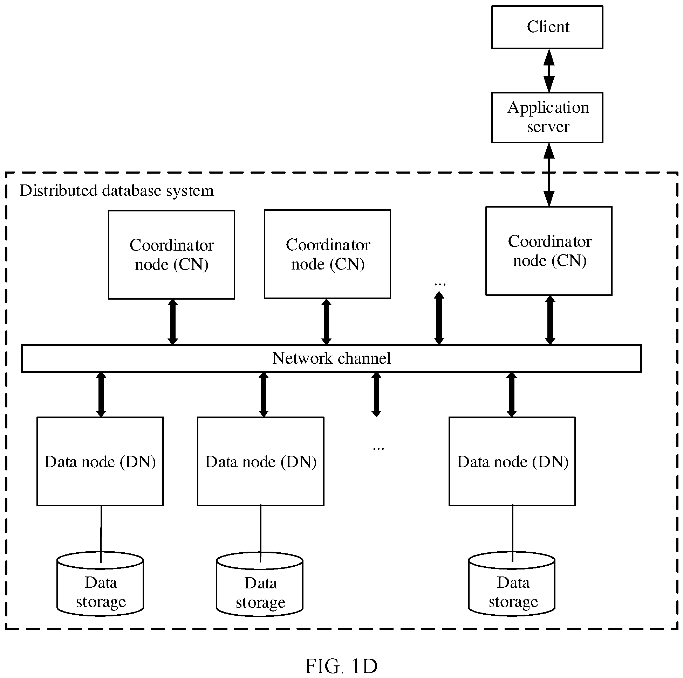

The database system provided in embodiments of this application may be a distributed database system (distributed database system, DDBS), for example, a database system with a massively parallel processing (massively parallel processing, MPP) architecture. The following describes the DDBS with reference to FIG. 1C and FIG. 1D.

FIG. 1C is a schematic diagram of a distributed database system with a shared storage (shared storage) architecture, including one or more coordinator nodes (coordinator node, CN) and a plurality of data nodes (data node, DN). The DDBS may further include another component, for example, a global transaction manager (global transaction manager, GTM). The CN and the DN communicate with each other through a network channel. The CN may generate, based on a received query, for example, a query from an application server, an execution plan corresponding to the query, and distribute, based on the execution plan, the query to a corresponding DN for execution. The CN may further generate a query result based on an execution result of the DN. In an embodiment, the network channel may include network devices such as a switch, a router, and a gateway. The CN and the DN work together to perform functions of a database management system and provide services such as database retrieval, insertion, modification, and deletion for a client. In an embodiment, the database management system is deployed on each CN and each DN. A shared data storage stores data that can be shared by a plurality of DNs, and the DN may perform, through the network channel, a read/write operation on the data in the data storage. The shared data storage may be a shared storage array. The CN and the DN in the distributed database system may be physical machines, such as database servers, or may be virtual machines (virtual machine, VM) or containers (container) running on abstract hardware resources. In an embodiment, the CN and the DN are the virtual machines or the containers, the network channel is a virtual switching network, and the virtual switching network includes a virtual switch. The database management systems deployed on the CN and the DN are DBMS instances (instance). The DBMS instance may be a process or a thread. These DBMSs work together to perform functions of a database relational system. In another embodiment, the CN and the DN are physical machines, and the network channel includes one or more switches. The switch is a storage area network (storage area network, SAN) switch, an Ethernet switch, an optical fiber switch, or another physical switching device.

FIG. 1D is a schematic diagram of a distributed database system with a shared-nothing (shared-nothing) architecture. Each DN has a dedicated hardware resource (for example, a CPU, a memory, and a data storage). A CN and a DN communicate with each other through a network channel. For understanding the network channel, refer to the corresponding description in FIG. 1C. In this system, data is distributed to each DN based on a database model and an application characteristic. A query task is divided by the CN into several parts, to be executed concurrently on a plurality of DNs. All DNs perform calculation coordinately and are used as a whole to provide a database service. All communication functions are implemented on a high-bandwidth network interconnection system. Similar to those in the distributed database system with the shared storage architecture described in FIG. 1C, the CN and the DN herein may be physical machines or virtual machines.

In all embodiments of this application, the data storage (data storage) of the database system includes but is not limited to a solid-state drive (solid-state drive, SSD), a disk array, or a non-transitory computer-readable medium of another type. Although a database is not shown in FIG. 1C and FIG. 1D, it should be understood that the database is stored in the data storage. Persons skilled in the art may understand that a database system may include components more or less than those shown in FIG. 1A to FIG. 1D, or include components different from those shown in FIG. 1A to FIG. 1D. FIG. 1A to FIG. 1D merely show components more related to implementations disclosed in embodiments of this application. However, persons skilled in the art may understand that a distributed database system may include any quantities of CNs and DNs. Database management system functions of CNs and DNs may be separately implemented by using an appropriate combination of software, hardware, and/or firmware on the CNs and DNs.

In embodiments of this application, the distributed database system may provide an application (APP) deployment service for an application developer. Specifically, an application may be deployed on a node, for example, the virtual machine, in the distributed database system. The virtual machine may include one or more data nodes DNs and a corresponding data storage (for example, the shared data storage in FIG. 1C or the data storage in FIG. 1D). The application may send a service request to the application server, and the application server processes the service request. For example, the application server converts the service request of the application into one or more data operation requests (an "operation request" for short, for example, a model training request and a model inference request in embodiments of this application) supported by or executable in the database system, and sends the data operation request to the distributed database system. In response to the data operation request, a DN corresponding to the application in the distributed database system performs an operation (for example, model training and model inference in embodiments of this application) on the data in the data storage.

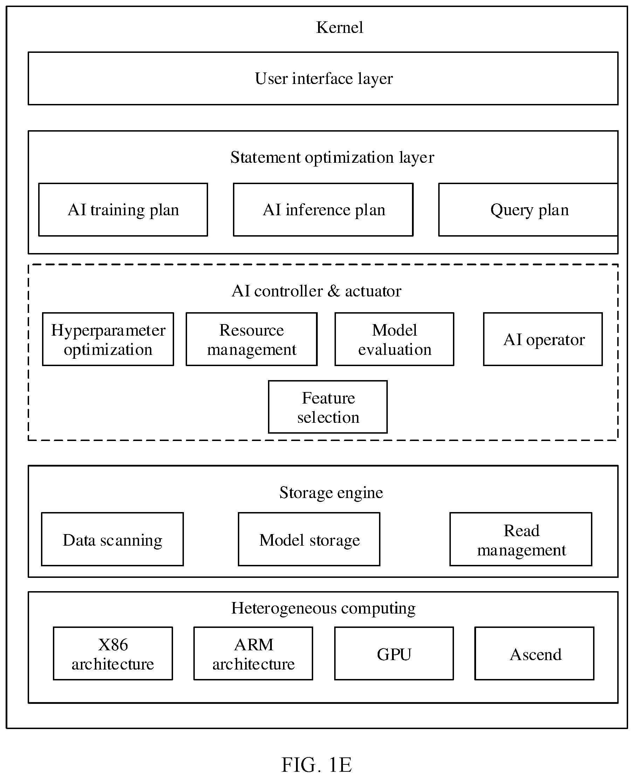

FIG. 1E is a diagram of a system architecture according to an embodiment of this application. A system may include a user interface layer, for implementing syntax such as SQL-like syntax, providing syntax such as PREDICT BY or CREATE MODEL, and supporting model training, estimation, and management; a statement optimization layer, for implementing a native AI operator in a database, where an optimizer generates an execution plan and cost estimation that include the native AI operator, viewing a detailed execution overhead by using an execution plan query statement (for example, an EXPLAIN statement), and providing a possible path selection capability; and an AI controller and an executor. The controller may be used to implement entireprocess AI management, for example, support model management and evaluation, support periodic and fixed-point model update and optimization, and perform incremental model reconstruction; support an AutoML capability and hyperparameter optimization; feature capabilities of feature selection, feature processing, and data cleaning, and analyze data set scale, distribution, and feature column association. The executor may be used to implement machine learning AI operators and parallel training of the AI operators. After the training is completed, model information is retained in a system table. A storage engine may be used to manage data scanning, model storage and read. Heterogeneous computing supports a plurality of computing platforms, including an x86 architecture, an ARM architecture, and an environment with a GPU and Ascend.

Because embodiments of this application relate to application of a large quantity of neural networks, for ease of understanding, the following first describes related terms included in embodiments of this application and related concepts such as a neural network.

(1) Neural network

The neural network may include neurons. The neuron may be an operation unit that uses xs (namely, input data) and an intercept of 1 as input. Output of the operation unit may be as follows:

$$h_{W,b}\left(x\right) = f\left(W^{T}x\right) = f(\sum\nolimits_{s=1}^{n} W_{s}x_{s} + b)$$

s = 1, 2, ..., or n, n is a natural number greater than 1, Ws is a weight of xs, and b is a bias of the neuron. f is an activation function (activation function) of the neuron, and is used to introduce a nonlinear feature into the neural network, to convert an input signal in the neuron into an output signal. The output signal of the activation function may be used as input of a next convolutional layer. The activation function may be a sigmoid function. The neural network is a network formed by connecting a plurality of single neurons together. To be specific, output of a neuron may be input of another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multilayer neural network, and may be understood as a neural network having a plurality of hidden layers. There is no special metric for "a plurality of" herein. The DNN is divided based on locations of different layers, and the neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Although the DNN seems complex, work of each layer is actually not complex, which is simply shown in the following linear relationship expression:

$$\vec{y} = \alpha(W\vec{x} + \vec{b}).$$

$\vec{X}$ is an input vector, $\vec{y}$ is an output vector, $\vec{b}$ is an offset vector, W is a weight matrix (also referred to as a coefficient), and $\alpha$ () is an activation function. At each layer, the output vector $\vec{y}$ is obtained by performing such a simple operation on the input vector $\vec{X}$. Because the DNN has the plurality of layers, there are also a plurality of coefficients W and bias vectors $\vec{b}$.

Definitions of these parameters in the DNN are as follows: The coefficient W is used as an example. It is assumed that in a DNN having three layers, a linear coefficient from a fourth neuron at a second layer to a second neuron at a third layer is defined as $W_{13}^{3}$. The superscript 3 represents a layer at which the coefficient W is located, and the subscript corresponds to an output third-layer index 2 and an input second-layer index 4. It is concluded that, a coefficient from a $k^{th}$ neuron at an $(L-1)^{th}$ layer to a $j^{th}$ neuron at an $L^{th}$ layer is defined as $W_{jk}^{L}$.

It should be noted that there is no W parameter at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Loss function

In a process of training a deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(4) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

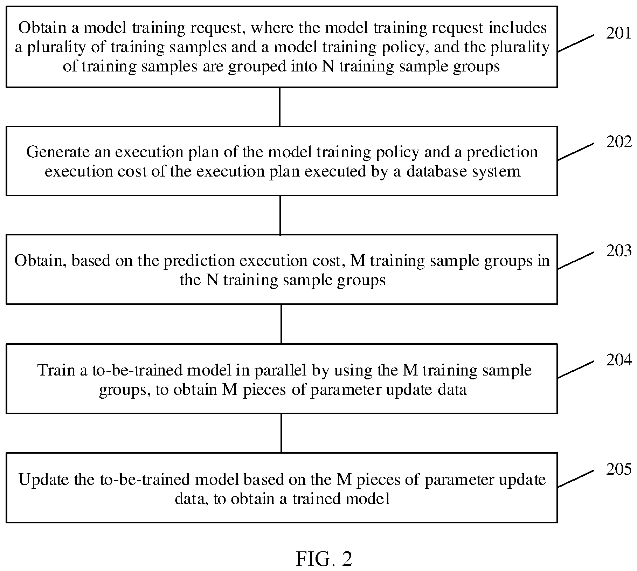

FIG. 2 is a schematic flowchart of a data processing method according to an embodiment of this application. As shown in FIG. 2, the data processing method provided in this embodiment of this application includes the following steps.
201: Obtain a model training request, where the model training request includes a plurality of training samples and a model training policy, and the plurality of training samples are grouped into N training sample groups.
In this embodiment of this application, a model training request entered by a user may be received, and a model inference request may be a structured query language (structured query language, SQL) statement.
In a possible implementation, an SQL parser may include a processing model (for example, the CREATE MODEL shown in FIG. 3) that is used to process the model training request related to training. The SQL parser may use the processing model that is used to process the model training request related to training to perform syntax parsing on an SQL, and after the syntax parsing succeeds, the SQL entered by the user may be transformed into a structured abstract syntax tree (abstract syntax tree, AST). A leaf node of the AST represents data provided by a data source, and a non-leaf node represents an SQL calculation operation. In a model training scenario, the data may be a plurality of training samples, and the SQL calculation operation may be the model training policy.
In this embodiment of this application, the plurality of training samples may be divided into the N training sample groups, and each training sample group may include a plurality of training samples. In an implementation, quantities of training samples included in different training sample groups may be the same or basically equal, and a quantity of training samples included in each training sample group may be determined based on a quantity of samples input each time a to-be-trained model is trained, for example, the quantity of training samples included in each training sample group may be equal to or basically equal to the quantity of samples input each time the to-be-trained model is trained.
In this embodiment of this application, an AI operator may be scanned in parallel, data may be loaded to a memory, and a shuffle operation is performed on the plurality of training samples indicated in the model training request, to obtain a plurality of shuffled training samples. The shuffle operation is used to shuffle the training samples, so that distribution of the training samples is as much as close to real distribution. This facilitates fitting of a machine learning algorithm, enhances a generalization capability, and reduces subsequent iteration rounds. For example, the shuffle operation may be implemented by using a shuffle operator (or the shuffle operator). In this way, the plurality of shuffled training samples are grouped, to obtain the N training sample groups.
It should be understood that an operation of grouping the plurality of training samples may be implemented in step 201, or between step 201 and step 202, or between step 202 and step 203, or between step 203 and step 204. This is not limited herein.
202: Generate an execution plan of the model training policy and an estimation execution cost of the execution plan executed by a database system.

In this embodiment of this application, after the AST is obtained, an optimizer may generate the execution plan of the model training policy based on the AST. The AST is equivalent to a logical plan, and semantic analysis may be performed on the AST to determine whether the data source of the leaf node of the AST exists, and determine whether the SQL calculation operation of the non-leaf node of the AST complies with the logic. Finally, rule-based optimizer (rule based optimizer, RBO), for example, calculation combination, or calculation reordering, is performed on the AST on which the semantic analysis is performed, to obtain an optimized execution plan.

To implement model training in a database, in a possible implementation, the AI operator may be preconfigured on the database. The AI operator may be an algorithm used when an AI-related operation is performed. For example, the AI operator may include but is not limited to a gradient descent operator gradient descent, a K-means operator, an Xgboost operator, a Bayes operator Bayes, a decision tree operator decision tree, a shuffle operator shuffle, an iteration operator iteration, and the like.

Further, the generated execution plan may include a plurality of AI operators and a connection relationship between the operators. The execution plan includes the plurality of AI operators, and the connection relationship between the operators may be used to implement the model training policy in the model training request. It should be understood that: An operator type of the AI operator may be preconfigured on the database system. For a specific type, refer to the description in the foregoing embodiment. Details are not described herein again.

In this embodiment of this application, in addition to the generated execution plan of the model training policy, the estimation execution cost of the execution plan may also be generated. The estimation execution cost of the execution plan may be a computing resource required for subsequently training, based on the execution plan, the to-be-trained model. An execution cost may also be referred to as an execution overhead corresponding to the execution plan.

In a possible implementation, the execution plan includes the plurality of AI operators, and the estimation execution cost of the execution plan is obtained based on estimation execution costs of the plurality of AI operators, for example, the estimation execution cost of the execution plan may be determined by integrating the estimation execution costs of the plurality of AI operators.

It should be understood that an estimation execution cost of each AI operator may be related to at least one piece of the following information: an amount of scanned data, an iteration round iteration, an iteration batch size (batch size), or a classification category quantity categorize. A specific model may further involve an ensemble algorithm, a quantity of base learners, a tree algorithm, a maximum tree depth, a quantity of leaf nodes, or the like.

In a possible implementation, the method further includes: obtaining, based on the plurality of AI operators, the estimation execution costs of the plurality of AI operators by using an execution plan query statement. Specifically, after the estimation execution costs are obtained, the estimation execution cost may be written into the execution plan (for example, an estimation execution plan of each AI operator may be written into the execution plan). The user may obtain this part of information by querying an SQL execution plan query statement. For example, in an openGauss database, an explain command may be used to query and execute an SQL estimation execution plan.

In this embodiment of this application, an estimated estimation execution cost is added to the execution plan for convenient query and optimization by the user.

For example, refer to FIG. 3. The estimation execution cost and the computing resource may be determined by using an AI operator cost and resource evaluation module in FIG. 3.

203: Obtain, based on the estimation execution cost, M training sample groups in the N training sample groups.

After the estimation execution cost is obtained, because the estimation execution cost may indicate the computing resource required for executing the execution plan, and available computing resources in the database are limited, a training rule may be determined based on the estimation execution cost, so that a training process of the to-be-trained model is performed more quickly with the limited available resources.

Specifically, for one to-be-trained model, the quantity of training samples that are input each time during training is limited, so that a large quantity of training samples need to be input for a plurality of times to complete the training process, and time overheads is high. In this embodiment of this application, when there are sufficient computing resources, a plurality of training sample groups are input in parallel to the to-be-trained model at a same moment, and therefore, the time overheads of the model training is reduced.

Specifically, the plurality of training sample groups may be input into a plurality of to-be-trained models. The plurality of to-be-trained models may be obtained by copying the to-be-trained model, or obtained by splitting the to-be-trained model, or obtained by fine tuning a structure of the to-be-trained model, or obtained after various combinations of the foregoing operations.

The quantity of training samples included in each training sample group in the plurality of training sample groups may be equal to or basically equal to the quantity of samples input each time the to-be-trained model is trained. When a total quantity of training samples remains unchanged, feedforward processing is performed in parallel on the plurality of training sample groups by using the to-be-trained model, so that time required for the model training can be greatly reduced, and training efficiency is improved.

A quantity M of training sample groups during parallel feedforward may be determined based on the estimation execution cost of the execution plan that is obtained through calculation.

In a possible implementation, a value of M is negatively correlated with the estimation execution cost. A higher estimation execution cost may indicate more computing resources required for executing the execution plan, so that a quantity of training sample groups during the parallel feedforward cannot be excessively high. Otherwise, currently available computing resources are insufficient. In addition, the value of M may also be related to the currently available computing resource in the database system. Specifically, the value of M is positively correlated with the currently available computing resource. More currently available computing resources indicate a larger value of M, in other words, more available computing resources indicate a larger allowed quantity of training sample groups during the parallel feedforward.

In this embodiment of this application, the value of M may be determined by integrating the estimation execution cost and the currently available computing resource, so that without exceeding the available computing resource, an amount of parallel model training is maximized, and usage of the computing resource is maximized.

204: Train the to-be-trained model in parallel by using the M training sample groups, to obtain M pieces of parameter update data.

In a possible implementation, a quantity of training samples used in parallel each time may be M. M copies of the to-be-trained model may be obtained, and each training sample group is input into one to-be-trained model. Alternatively, the to-be-trained model is split to obtain M small models, and each training sample group is input into one small model. Alternatively, M1 copies of the to-be-trained model may be obtained, and the to-be-trained model is split to obtain M2 small models, where a sum of M1 and M2 is M. Each training sample group is input into one small model or one to-be-trained model, and the feedforward processing of the model is performed to obtain the M pieces of parameter update data (one piece of parameter update data may be obtained by using each to-be-trained model or small model, and the parameter update data may be the update gradient, a variation of a model parameter, or the like), so that the to-be-trained model may be updated based on the M pieces of parameter update data.

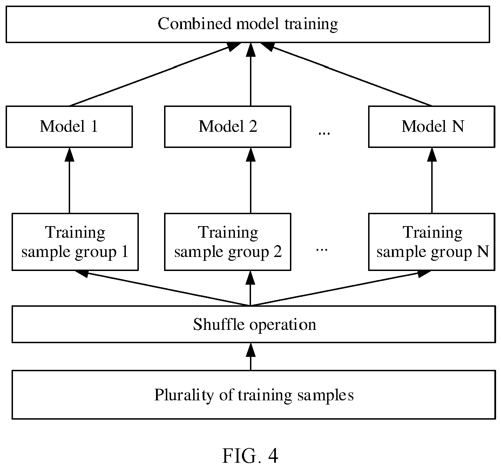

For example, refer to FIG. 3. The foregoing parallel process may be performed by using an AI operator parallel training module in FIG. 3. Refer to FIG. 4. FIG. 4 a schematic flowchart of parallel training.

205: Update the to-be-trained model based on the M pieces of parameter update data, to obtain a trained model.

In a possible implementation, after the M pieces of parameter update data are obtained, the M pieces of parameter update data may be summarized, and a loss function is constructed based on a summation result to train the to-be-trained model, so as to generate the trained model. For example, the to-be-trained model may be trained in a manner such as a back propagation algorithm.

It should be understood that iterations may also be performed, based on the training sample, on the trained model for several times, and a complete model is finally obtained by fine tuning a parameter. For a generated model, detailed information and training information of the model may be stored.

For example, refer to FIG. 3. The detailed information and the training information of the model may be stored by using an AI model management module in FIG. 3.

It is verified that, for a support vector machine (support vector machines, SVM) and linear regression, in comparison with an open-source project MADlib, performance may be improved by 13x to 174x based on DB4AI in-database AI algorithms implemented in an openGauss database in this embodiment of this application.

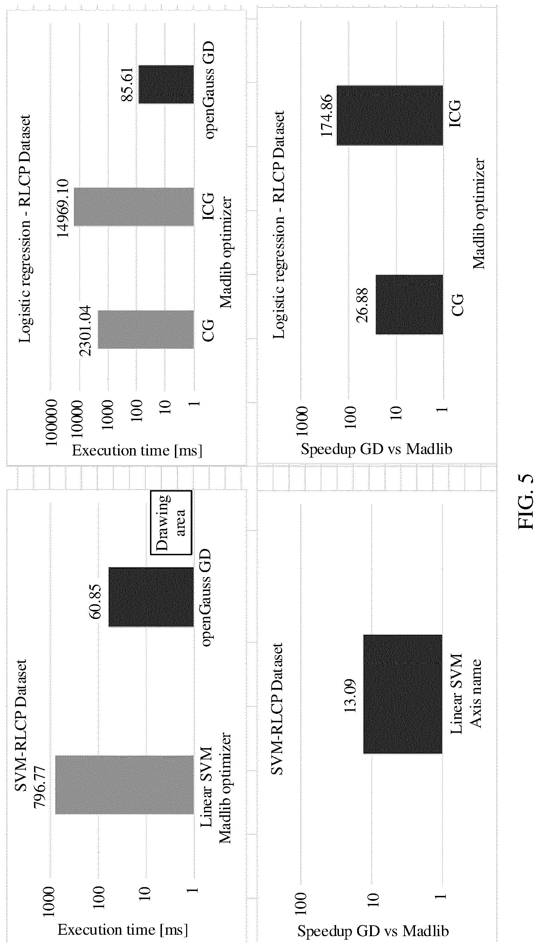

FIG. 5 is a schematic diagram of verifying, based on an RLCP dataset, effect of training execution time of an SVM and linear regression. An openGauss GD operator is a DB4AI in-database newly added AI optimization algorithm. The openGauss GD operator supports three current algorithms of the SVM, the linear regression, and logistic regression. A corresponding SVM algorithm and a corresponding logistic regression algorithm are selected from an MADlib open-source library for comparison. Optimization algorithms involved in the comparison are SVM linear kernel, conjugate gradient (conjugate gradient, CG), and incremental gradient descent (incremental gradient descent, IGD). The upper two figures in FIG. 5 are schematic diagrams of the execution time, and the lower two figures are schematic diagrams of performance ratio improvement.

In a possible implementation, a user may indicate, in a model training request, to train X to-be-trained models for implementing a same task, so that the X to-be-trained models need to be trained to obtain X trained models. Each to-be-trained model corresponds to one trained model (for a training manner of each of the X to-be-trained models, refer to the description in the foregoing embodiment). It should be understood that the X trained models may be different models (for example, having different model structures and different algorithms), and the X trained models are used to implement a target task, for example, an image classification task, an image segmentation task, or an image recognition task. Model information stored in a system table may include a model type. For example, models that perform a same task model training by using a linear regression algorithm (linear_regression), a lasso regression algorithm (lasso_regression), and a logistic regression algorithm (logistic_regression) are identified as models of a same type. The models identified as the models of the same type may be considered to be used to implement a same task.

When model inference is performed, a model inference request entered by the user may be received. The model training request may be an SQL statement, and the model inference request indicates the target task.

In a possible implementation, the SQL parser may include a processing model (for example, PREDICT BY shown in FIG. 3) that is used to process the model inference request related to inference. The SQL parser may use the processing model that is used to process the model inference request related to inference to perform the syntax parsing on an SQL, to obtain an indication of the user for the target task.

In response to the model inference request of the user, the models (the X trained models) used to implement the target task may be obtained from the memory, and a model (namely, a target model) used to perform the model inference is selected from the X trained models.

In this embodiment of this application, a currently available computing resource and an execution cost of each of the X trained models may be obtained, and the target model is determined from the X trained models. The target model is used to perform the model inference.

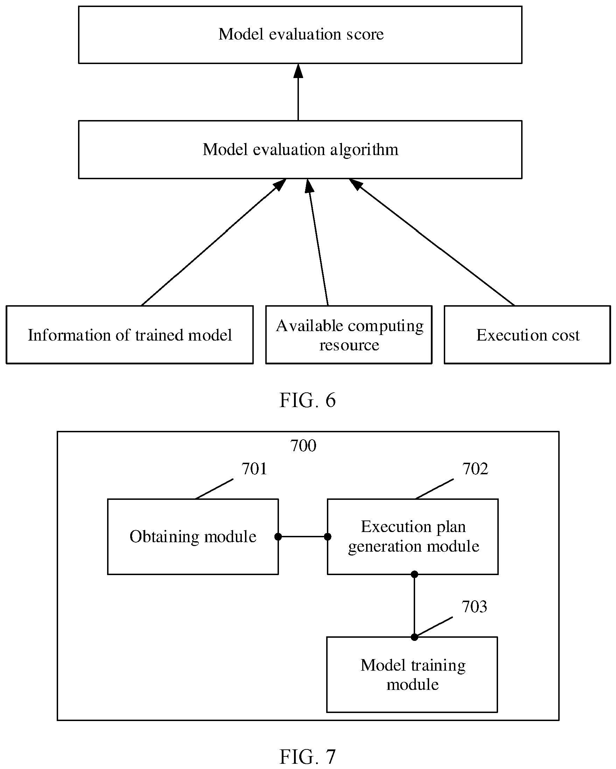

Specifically, refer to FIG. 6. To select, from the X trained models, a model with best performance in a current case for inference, the target model may be determined with reference to model performance of the model and the available computing resource of the current database. The model performance of the model may include information such as accuracy (accuracy), precision (precision), an F1 score, and a recall (recall). The model performance may further include the estimation execution cost of the model. Available computing resources may indicate a current load status, and may include, for example, at least one of an input/output I/O resource, a central processing unit CPU resource, a graphics processing unit GPU resource, and a memory resource.

In a possible implementation, the target model may be determined from the X trained models based on the model performance of the model and the available computing resource of the current database. A determined rule may be: When the currently available computing resource can meet a requirement of the estimation execution cost (that is, overload is avoided), the model with optimal model performance is selected as the target model for inference. This greatly improves the performance during inference. For example, an evaluation score of each trained model may be obtained based on the model performance of the model and the available computing resource of the current database. The evaluation score may indicate a priority of selecting the model for inference.

In this embodiment of this application, an existing resource and the execution cost in the database are introduced as evaluation criteria for evaluating the model, and a dimension for evaluating the model is added in an actual operating scenario. Therefore, availability of the model can be verified more comprehensively, and an optimal model is selected for inference.

For example, refer to FIG. 3. The target model may be selected by using an AI model adaptive selection module and an AI operator resource management and control module.

An example in which the X trained models are used to implement house price forecast is used. Implementation effect of the foregoing steps for selecting the target model may be shown in Table 1.

**Table 1**

| Sequence number of a model | Algorithm type | Accuracy | Optimal model |
|---|---|---|---|
| 1 | Logistic regression algorithm | 0.91 | Yes |
| 2 | Lasso regression algorithm | 0.89 | No |
| 3 | Linear regression algorithm | 0.5 | No |

It can be learned from Table 1 that an optimal model may be found from house price forecast-based inference models by using a plurality of algorithms for final inference invocation.

This embodiment of this application provides a data processing method, applied to the database system. The method includes: obtaining a model training request, where the model training request includes a plurality of training samples and a model training policy, and the plurality of training samples are grouped into N training sample groups; generating an execution plan of the model training policy and an estimation execution cost of the execution plan executed by the database system; obtaining, based on the estimation execution cost, M training sample groups in the N training sample groups; training a to-be-trained model in parallel by using the M training sample groups, to obtain M pieces of parameter update data; and updating the to-be-trained model based on the M pieces of parameter update data, to obtain the trained model. In the foregoing manner, the plurality of training sample groups are input in parallel to the to-be-trained model at a same moment. This reduces time overheads of model training.

The foregoing describes in detail the data processing method in embodiments of this application with reference to FIG. 2 to FIG. 6. The following describes a data processing apparatus provided in embodiments of this application from a perspective of a functional unit with reference to the accompanying drawings.

Refer to FIG. 7. FIG. 7 shows a data processing apparatus according to an embodiment of this application. The data processing apparatus is applied to a database system. The apparatus includes:

an obtaining module 701, configured to obtain a model training request, where the model training request includes a plurality of training samples and a model training policy, and the plurality of training samples are grouped into N training sample groups;

an execution plan generation module 702, configured to generate an execution plan of the model training policy and an estimation execution cost of the execution plan executed by the database system;

the obtaining module 701 is further configured to obtain, based on the estimation execution cost, M training sample groups in the N training sample groups; and

a model training module 703, configured to: perform feedforward processing in parallel on each of the M training sample groups by using a to-be-trained model, to obtain M pieces of parameter update data; and update the to-be-trained model based on the M pieces of parameter update data, to obtain a trained model.

In a possible implementation, the parameter update data is an update gradient of the model.

In a possible implementation, the execution plan includes a plurality of AI operators, and an operator type of the AI operator is preconfigured on the database system.

In a possible implementation, the estimation execution cost of the execution plan is obtained based on estimation execution costs of the plurality of AI operators.

In a possible implementation, the obtaining module 701 is further configured to:

obtain, based on the plurality of AI operators, the estimation execution costs of the plurality of AI operators by using an execution plan query statement.

In a possible implementation, a value of M is negatively correlated with the estimation execution cost.

In a possible implementation, the obtaining module 701 is further configured to:

obtain a currently available computing resource of the database system; and
the obtaining module 701 is further configured to:
obtain, based on the estimation execution cost and the currently available computing resource, the M training sample groups in the N training sample groups. The value of M is positively correlated with the currently available computing resource.

In a possible implementation, the apparatus further includes a sample grouping module, configured to: perform a shuffle operation on the plurality of training samples, to obtain a plurality of shuffled training samples; and group the plurality of shuffled training samples, to obtain the N training sample groups.

In a possible implementation, there are X to-be-trained models, there are X trained models, each to-be-trained model corresponds to one trained model, the X trained models are different models, and the X trained models are used to implement a target task.

The obtaining module 701 is further configured to:

after that the to-be-trained model is updated based on the M pieces of parameter update data, to obtain a trained model, obtain a model inference request, where the model inference request indicates N trained models; and
obtain a currently available computing resource and an execution cost of each of the N trained models, and determine a target model from the N trained models.

The apparatus further includes:
a model inference module, configured to perform model inference by using the target model.

In a possible implementation, the computing resource includes at least one of the following:
an input/output I/O resource, a central processing unit CPU resource, a graphics processing unit GPU resource, and a memory resource.

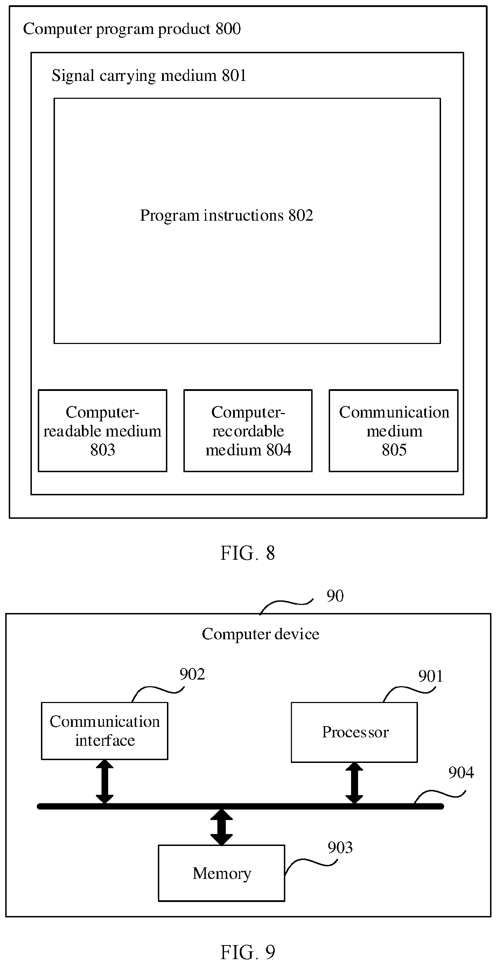

Refer to FIG. 8. This application further provides a computer-readable storage medium. In some embodiments, the method disclosed in FIG. 2 may be implemented as computer program instructions encoded in a machine-readable format on a computer-readable storage medium or encoded on another non-transitory medium or product. FIG. 8 schematically shows a conceptual partial view of an example computer program product arranged according to at least some embodiments shown herein, and the example computer program product includes a computer program for executing a computer process on a computing device. In one embodiment, an example computer program product 800 is provided by using a signal carrying medium 801. The signal carrying medium 801 may include one or more program instructions 802. When the program instructions 802 are run by one or more processors, the program instructions 802 may provide functions or some functions described in FIG. 2. Therefore, for example, refer to the embodiment shown in FIG. 2. One or more features of step 201 to step 205 may be assumed by one or more instructions associated with the signal carrying medium 801. In addition, the program instructions 802 in FIG. 8 also describe example instructions.

In some examples, the signal carrying medium 801 may include a computer-readable medium 803, for example, including but not limited to a hard disk drive, a compact disc (CD), a digital video disc (DVD), a digital magnetic tape, a memory, a read-only memory (Read-Only Memory, ROM), or a random access memory (Random Access Memory, RAM). In some implementations, the signal carrying medium 801 may include a computer-recordable medium 804, for example, including but not limited to a memory, a read/write (R/W) CD, or an R/W DVD. In some implementations, the signal carrying medium 801 may include a communication medium 805, for example, including but not limited to a digital and/or analog communication medium (for example, an optical cable, a waveguide, a wired communication link, or a wireless communication link). Therefore, for example, the signal carrying medium 801 may be conveyed by a wireless-form communication medium 805 (for example, a wireless communication medium that complies with the IEEE 802.11 standard or another transmission protocol). The one or more program instructions 802 may be, for example, computer-executable instructions or logic implementation instructions. In some examples, a computing device may be configured to provide various operations, functions, or actions in response to the program instructions 802 transmitted to the computing device by using one or more of the computer-readable medium 803, the computer-recordable medium 804, and/or the communication medium 805. It should be understood that an arrangement described herein is merely used as an example. Therefore, it may be understood by persons skilled in the art that other arrangements and other elements (for example, machines, interfaces, functions, sequences, and groups of functions) can be used instead, and that some elements may be omitted together based on an expected result. In addition, many of the described elements are functional entities that can be implemented as discrete or distributed components, or implemented in any suitable combination at any suitable location in combination with another component.

FIG. 9 is a schematic diagram of a possible logical structure of a computer device 90 in the foregoing embodiments according to an embodiment of this application. The computer device 90 may be the operation request processing apparatus in FIG. 8. The computer device 90 includes a processor 901, a communication interface 902, a memory 903, and a bus 904. The processor 901, the communication interface 902, and the memory 903 are connected to each other through the bus 904. In this embodiment of this application, the processor 901 is configured to perform the steps in step 201 to step 205 in the embodiment in FIG. 2. The communication interface 902 is configured to support the computer device 90 in performing communication. For example, the communication interface 902 may perform steps related to receiving or sending in the foregoing method embodiments. The memory 903 is configured to store program code and data of a database server.

The processor 901 may be a central processing unit, a general-purpose processor, a digital signal processor, an application-specific integrated circuit, a field programmable gate array or another programmable logic device, a transistor logic device, a hardware component, or any combination thereof. The processor may implement or perform various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 904 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one bold line is used for representation in FIG. 9, but this does not mean that there is only one bus or only one type of bus.

In another embodiment of this application, a chip system is further provided. The chip system includes a processor, configured to support a time series data injection apparatus or a time series data query apparatus in implementing the operation request processing method described in the foregoing embodiment in FIG. 2. In a possible design, the chip system further includes a memory. The memory is configured to store program instructions and data that are necessary for an apparatus used to manage data of an application. The chip system may include a chip, or may include a chip and another discrete device.

Persons of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of embodiments of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of embodiments of this application. Any variation or replacement readily figured out by persons skilled in the art within the technical scope disclosed in embodiments of this application shall fall within the protection scope of embodiments of this application. Therefore, the protection scope of embodiments of this application should be subject to the protection scope of the claims.

## Claims

1. A data processing method, applied to a database system, wherein the method comprises:

   obtaining a model training request, wherein the model training request comprises a plurality of training samples and a model training policy, and the plurality of training samples are grouped into N training sample groups;
   generating an execution plan of the model training policy and an estimation execution cost of the execution plan executed by the database system;
   obtaining, based on the estimation execution cost, M training sample groups in the N training sample groups;
   training a to-be-trained model in parallel by using the M training sample groups, to obtain M pieces of parameter update data; and
   updating the to-be-trained model based on the M pieces of parameter update data, to obtain a trained model.

2. The method according to claim 1, wherein the parameter update data is an update gradient of the model.

3. The method according to claim 1 or 2, wherein the execution plan comprises a plurality of AI operators, and an operator type of the AI operator is preconfigured on the database system.

4. The method according to any one of claims 1 to 3, wherein the estimation execution cost of the execution plan is obtained based on estimation execution costs of the plurality of AI operators.

5. The method according to claim 4, wherein the method further comprises:
   obtaining, based on the plurality of AI operators, the estimation execution costs of the plurality of AI operators by using an execution plan query statement.

6. The method according to any one of claims 1 to 5, wherein a value of M is negatively correlated with the estimation execution cost.

7. The method according to any one of claims 1 to 6, wherein the method further comprises:

   obtaining a currently available computing resource of the database system; and
   the obtaining, based on the estimation execution cost, M training sample groups in the N training sample groups comprises:
   obtaining, based on the estimation execution cost and the currently available computing resource, the M training sample groups in the N training sample groups, wherein the value of M is positively correlated with the currently available computing resource.

8. The method according to any one of claims 1 to 7, wherein the method further comprises: performing a shuffle operation on the plurality of training samples, to obtain a plurality of shuffled training samples; and grouping the plurality of shuffled training samples, to obtain the N training sample groups.

9. The method according to any one of claims 1 to 8, wherein there are X to-be-trained models, there are X trained models, each to-be-trained model corresponds to one trained model, the X trained models are different models, and the X trained models are used to implement a target task; and
after the updating the to-be-trained model based on the M pieces of parameter update data, to obtain a trained model, the method further comprises:

    obtaining a model inference request, wherein the model inference request indicates the target task;
    obtaining the currently available computing resource and an execution cost of each of the X trained models, and determining a target model from the X trained models; and
    performing model inference by using the target model.

10. The method according to claim 9, wherein the computing resource comprises at least one of the following:
an input/output I/O resource, a central processing unit CPU resource, a graphics processing unit GPU resource, and a memory resource.

11. The method according to claim 9 or 10, wherein the model inference request is a structured query language SQL statement.

12. The method according to any one of claims 1 to 11, wherein the model training request is an SQL statement.

13. A data processing apparatus, used in a database system, wherein the apparatus comprises:

    an obtaining module, configured to obtain a model training request, wherein the model training request comprises a plurality of training samples and a model training policy, and the plurality of training samples are grouped into N training sample groups;
    an execution plan generation module, configured to generate an execution plan of the model training policy and an estimation execution cost of the execution plan executed by the database system, wherein
    the obtaining module is further configured to obtain, based on the estimation execution cost, M training sample groups in the N training sample groups; and
    a model training module, configured to: perform feedforward processing in parallel on each of the M training sample groups by using a to-be-trained model, to obtain M pieces of parameter update data; and update the to-be-trained model based on the M pieces of parameter update data, to obtain a trained model.

14. The apparatus according to claim 13, wherein the parameter update data is an update gradient of the model.

15. The apparatus according to claim 13 or 14, wherein the execution plan comprises a plurality of AI operators, and an operator type of the AI operator is preconfigured on the database system.

16. The apparatus according to any one of claims 13 to 15, wherein the estimation execution cost of the execution plan is obtained based on estimation execution costs of the plurality of AI operators.

17. The apparatus according to claim 16, wherein the obtaining module is further configured to:
obtain, based on the plurality of AI operators, the estimation execution costs of the plurality of AI operators by using an execution plan query statement.

18. The apparatus according to any one of claims 13 to 17, wherein a value of M is negatively correlated with the estimation execution cost.

19. The apparatus according to any one of claims 13 to 18, wherein the obtaining module is further configured to:

    obtain a currently available computing resource of the database system; and

the obtaining module is further configured to:
obtain, based on the estimation execution cost and the currently available computing resource, the M training sample groups in the N training sample groups, wherein the value of M is positively correlated with the currently available computing resource.

20. The apparatus according to any one of claims 13 to 18, wherein the apparatus further comprises a sample grouping module, configured to: perform a shuffle operation on the plurality of training samples, to obtain a plurality of shuffled training samples; and
group the plurality of shuffled training samples, to obtain the N training sample groups.

21. The apparatus according to any one of claims 13 to 20, wherein there are X to-be-trained models, there are X trained models, each to-be-trained model corresponds to one trained model, the X trained models are different models, and the X trained models are used to implement a target task;
the obtaining module is further configured to:

after that the to-be-trained model is updated based on the M pieces of parameter update data, to obtain a trained model, obtain a model inference request, wherein the model inference request indicates N trained models, and obtain the currently available computing resource and an execution cost of each of the N trained models, and determine a target model from the N trained models; and
the apparatus further comprises:
a model inference module, configured to perform model inference by using the target model.

22. The apparatus according to claim 21, wherein the computing resource comprises at least one of the following:
an input/output I/O resource, a central processing unit CPU resource, a graphics processing unit GPU resource, and a memory resource.

23. The apparatus according to claim 20 or 21, wherein the model inference request is a structured query language SQL statement.

24. The apparatus according to any one of claims 13 to 23, wherein the model training request is an SQL statement.

25. A data processing apparatus, wherein the apparatus comprises at least one processor, a memory, and instructions that are stored in the memory and that can be executed by the at least one processor, and the at least one processor executes the instructions, to implement steps of the method according to any one of claims 1 to 12.

26. A computer-readable storage medium, storing a computer program, wherein when the program is executed by a computer, the method according to any one of claims 1 to 12 is implemented.

27. A computer program product, comprising computer-readable instructions, wherein when the computer-readable instructions are run on a computer, the computer is enabled to perform the method according to any one of claims 1 to 12.

Client 200 - - - → Use data

Application server 300

Database system 100

Database management system 130 - - - → Manage data

Database 110

Database storage 120 - - - → Store data

FIG. 1A

Application server 300

Access control

Session management

| Data management | Resource monitoring |

Storage management

FIG. 1B

FIG. 1C

FIG. 1D

Kernel

User interface layer

Statement optimization layer

| AI training plan | AI inference plan | Query plan |

AI controller & actuator

| Hyperparameter optimization | Resource management | Model evaluation | AI operator |

Feature selection

Storage engine

| Data scanning | Model storage | Read management |

Heterogeneous computing

| X86 architecture | ARM architecture | GPU | Ascend |

FIG. 1E

Obtain a model training request, where the model training request includes a plurality of training samples and a model training policy, and the plurality of training samples are grouped into N training sample groups — 201

Generate an execution plan of the model training policy and a prediction execution cost of the execution plan executed by a database system — 202

Obtain, based on the prediction execution cost, M training sample groups in the N training sample groups — 203

Train a to-be-trained model in parallel by using the M training sample groups, to obtain M pieces of parameter update data — 204

Update the to-be-trained model based on the M pieces of parameter update data, to obtain a trained model — 205

FIG. 2

FIG. 3

```
┌─────────────────────────────────────────────────────────┐
│                 Combined model training                  │
└─────────────────────────────────────────────────────────┘

┌──────────────┐   ┌──────────────┐          ┌──────────────┐
│   Model 1    │   │   Model 2    │   ...    │   Model N    │
└──────────────┘   └──────────────┘          └──────────────┘

┌──────────────┐   ┌──────────────┐          ┌──────────────┐
│  Training    │   │  Training    │   ...    │  Training    │
│sample group 1│   │sample group 2│          │sample group N│
└──────────────┘   └──────────────┘          └──────────────┘

┌─────────────────────────────────────────────────────────┐
│                    Shuffle operation                     │
└─────────────────────────────────────────────────────────┘

┌─────────────────────────────────────────────────────────┐
│               Plurality of training samples              │
└─────────────────────────────────────────────────────────┘
```

FIG. 4

FIG. 5

Model evaluation score

↑

Model evaluation algorithm

Information of trained model | Available computing resource | Execution cost

FIG. 6

700

701

Obtaining module

702

Execution plan generation module

703

Model training module

FIG. 7

Computer program product 800

Signal carrying medium 801

Program instructions 802

| Computer-readable medium 803 | Computer-recordable medium 804 | Communication medium 805 |
|---|---|---|

FIG. 8

90

Computer device

902

901

Communication interface

Processor

904

903

Memory

FIG. 9

<div align="center">

**INTERNATIONAL SEARCH REPORT**

</div>

| | International application No. |
|---|---|
| | **PCT/CN2022/101826** |

| **A.** | **CLASSIFICATION OF SUBJECT MATTER** |
|---|---|
| | G06F 16/23(2019.01)i |

According to International Patent Classification (IPC) or to both national classification and IPC

| **B.** | **FIELDS SEARCHED** |
|---|---|

Minimum documentation searched (classification system followed by classification symbols)
    G06F

Documentation searched other than minimum documentation to the extent that such documents are included in the fields searched

Electronic data base consulted during the international search (name of data base and, where practicable, search terms used)

CNABS, CNTXT, DWPI, WPABS, ENTXT, CNKI, 万方, WANFANG, IEEE: 数据库, 模型, 训练, 请求, 策略, 分组, 样本, 计划, 预测, 资源, 代价, 并行, 更新, database, model, train, request, strategy, grouping, sample, plan, predict, source, cost, parallel, update, renew

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| Y | CN 111709533 A (TENCENT TECHNOLOGY SHENZHEN CO., LTD.) 25 September 2020 (2020-09-25) <br> description, paragraphs 18-156, and figures 1-13 | 1-27 |
| Y | CN 106611021 A (ALIBABA GROUP HOLDING LIMITED) 03 May 2017 (2017-05-03) <br> description, paragraphs 22-128, and figures 1-4 | 1-27 |
| A | CN 103971136 A (NANJING NORMAL UNIVERSITY) 06 August 2014 (2014-08-06) <br> entire document | 1-27 |
| A | CN 110796270 A (SHENZHEN COOS SCIENCE & DEVELOPMENT CO., LTD.) 14 February 2020 (2020-02-14) <br> entire document | 1-27 |
| A | CN 110807510 A (CHINA UNIVERSITY OF MINING AND TECHNOLOGY) 18 February 2020 (2020-02-18) <br> entire document | 1-27 |
| A | CN 112329885 A (JIANGSU YUNCONGXIHE ARTIFICIAL INTELLIGENCE CO., LTD.) 05 February 2021 (2021-02-05) <br> entire document | 1-27 |

✓ Further documents are listed in the continuation of Box C.     ✓ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 August 2022** | **02 September 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/101826**

**C.    DOCUMENTS CONSIDERED TO BE RELEVANT**

| Category* | Citation of document, with indication, where appropriate, of the relevant passages | Relevant to claim No. |
|---|---|---|
| A | CN 110796513 A (BEIJING SANKUAI ONLINE TECHNOLOGY CO., LTD.) 14 February 2020 (2020-02-14) entire document | 1-27 |
| A | EP 3742344 A1 (ROBERT BOSCH GMBH) 25 November 2020 (2020-11-25) entire document | 1-27 |

Form PCT/ISA/210 (second sheet) (January 2015)

**INTERNATIONAL SEARCH REPORT**
Information on patent family members

International application No.

**PCT/CN2022/101826**

| Patent document cited in search report | | | Publication date (day/month/year) | Patent family member(s) | | | Publication date (day/month/year) |
|---|---|---|---|---|---|---|---|
| CN | 111709533 | A | 25 September 2020 | CN | 111709533 | B | 30 March 2021 |
| | | | | WO | 2022037337 | A1 | 24 February 2022 |
| CN | 106611021 | A | 03 May 2017 | CN | 106611021 | B | 02 June 2020 |
| CN | 103971136 | A | 06 August 2014 | | None | | |
| CN | 110796270 | A | 14 February 2020 | | None | | |
| CN | 110807510 | A | 18 February 2020 | | None | | |
| CN | 112329885 | A | 05 February 2021 | CN | 112329885 | B | 09 July 2021 |
| CN | 110796513 | A | 14 February 2020 | | None | | |
| EP | 3742344 | A1 | 25 November 2020 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110729805X